# FASCICULE DE BREVET EUROPEEN

(11) **EP 0 989 031 B1**
(45) Date de publication et mention de la délivrance du brevet: **02.05.2003**
(21) Numéro de dépôt: 99115993.0
(22) Date de dépôt: 14.08.1999
(51) Int. Cl.: B60R 16/00

(54) **Ensemble haut de colonne électronisé**
Elektronisches Lenksäulenoberteil
Upper steering column electronic assembly

(30) Priorité: 03.09.1998 FR 9811009
(43) Date de publication de la demande: 29.03.2000
(73) Titulaire: Valeo Electronique, 94042 Créteil (FR)
(72) Inventeur: Le Toumelin, Rémi, 77400 Lagny (FR)
(74) Mandataire: Lemaire, Marc

(56) Documents cités:
- EP-A- 0 763 447
- EP-A- 0 768 688
- DE-A- 4 432 343
- DE-A- 19 700 175

## Description

L'invention concerne un ensemble haut de colonne de direction de véhicule automobile, du type comportant un boîtier support destiné à être monté sur un tube de colonne de direction et des dispositifs de commutation d'éclairage et d'essuyage qui présentent des manettes de commande qui s'étendent vers l'extérieur sur les faces latérales dudit boîtier, et des mécanismes de commutation et d'indexage logeant dans ledit boîtier, lesdits dispositifs de commutation comportant notamment des contacts actionnables par lesdites manettes de commande pour coopérer avec des pistes conductrices fixes par rapport au boîtier.

En général, les pistes conductrices sont disposées sur des platines prévues sur la face avant du boîtier, l'avant étant défini par rapport au sens de déplacement normal du véhicule. Ces platines sont équipées de connecteurs reliés au faisceau électrique du véhicule. Ces connecteurs sont situés à l'arrière du boîtier, ce qui augmente l'espace nécessaire pour loger l'ensemble haut de colonne et les connecteurs dans le sens de l'axe de la colonne de direction, d'autant plus que les dispositifs d'éclairage et d'essuyage commutent habituellement la puissance des consommateurs ce qui les rend volumineux et induit un prix élevé du faisceau du véhicule.

En outre, d'autres fonctions sont réunies sous le volant en haut de la colonne de direction. On peut citer notamment le contacteur antivol, le système transpondeur, le satellite radio, le contacteur tournant (airbag), le capteur d'angle, le régulateur d'allure. Ces fonctions se présentent sous forme de modules séparés, assemblés sur un support et comportant des connectiques qui leur sont propres, ce qui induit des coûts au niveau du faisceau du véhicule. Dans ce cas, l'ensemble haut de colonne est onéreux, car il est composé de plusieurs éléments qu'il faut loger et maintenir en place sur le boîtier.

Un ensemble haut de colonne de direction de véhicule automobile ayant les caractéristiques du préambule de la revendication 1 est décrit dans le document EP-A-0 736 447.

L'invention s'est donné pour but de proposer un ensemble haut de colonne du type mentionné qui pallie les inconvénients cités.

L'invention atteint son but par le fait que les contacts sont tous disposés dans un même plan sur la face arrière du boîtier, l'arrière étant défini par rapport au sens de déplacement normal du véhicule et par le fait que les pistes conductrices sont formées sur un circuit flexible disposé sur ladite face arrière de boîtier, ce circuit flexible étant connecté à une carte électronique disposée dans un logement prévu sous la face supérieure du boîtier.

Avantageusement, la carte électronique ne commute que des petits signaux. Le circuit flexible est rigidifié dans les zones situées au droit des pistes conductrices.

De préférence, les fonctions de commutation sont localement codées sur le circuit flexible en niveau de tension dans les zones rigidifiées afin de réduire le nombre de pistes entre ces zones. Le circuit flexible comporte en outre des connecteurs pour la liaison de fonctions supplémentaires et une limande pour le branchement d'un module contacteur antivol.

D'autres avantages et caractéristiques de l'invention ressortiront à la lecture de la description suivante faite à titre d'exemple non limitatif et en référence aux dessins annexés dans lesquels :

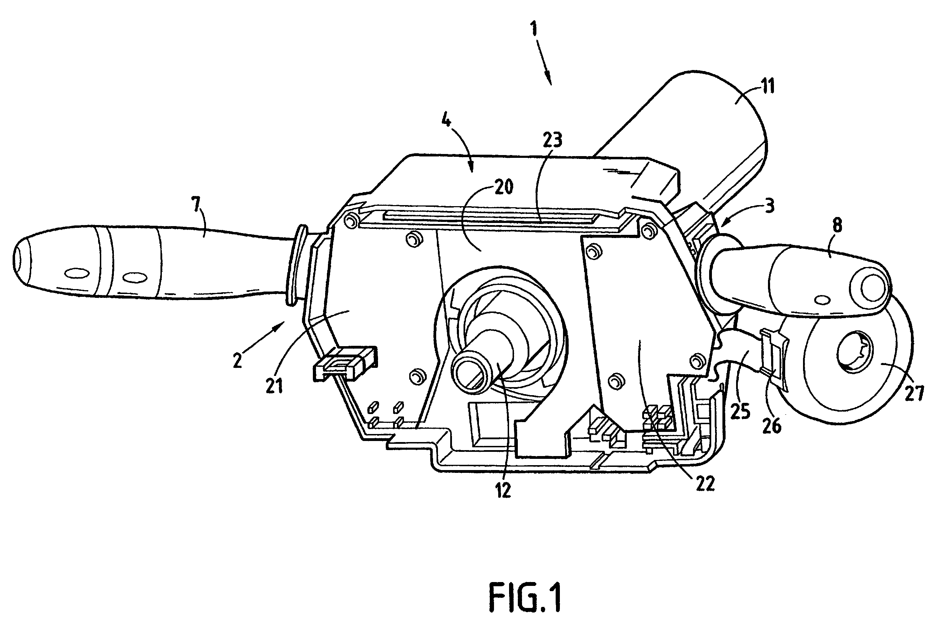

la figure 1 est une vue schématique en perspective d'un ensemble haut de colonne selon l'invention, monté sur un tube de colonne de direction, le couvercle du boîtier support ayant été enlevé par souci de clarté ;
la figure 2 est une vue semblable à celle de la figure 1, le boîtier support étant équipé d'un couvercle incluant un contacteur tournant ;
la figure 3 est une vue semblable à celle de la figure 1, le circuit flexible ayant été enlevé, afin de montrer les contacts des dispositifs de commutation d'éclairage et d'essuyage ;
les figures 4 à 8 montrent en perspective les mécanismes d'un dispositif de commutation selon l'invention, dont la manette de commande comporte un bouton poussoir et deux bagues rotatives, cinq positions en rotation dans le plan parallèle au volant et trois positions dans le sens tirer/pousser :

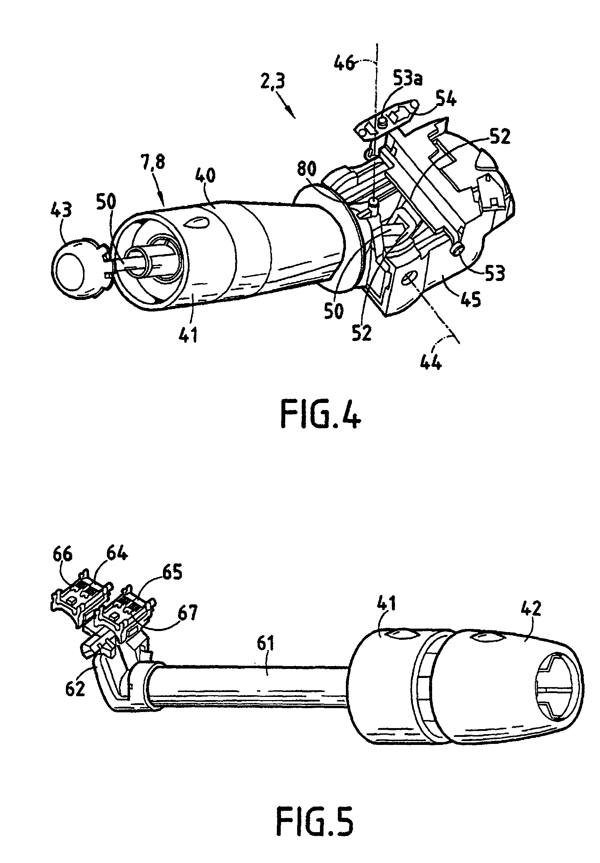

la figure 4 montre le mécanisme de commutation actionné par le bouton poussoir ;

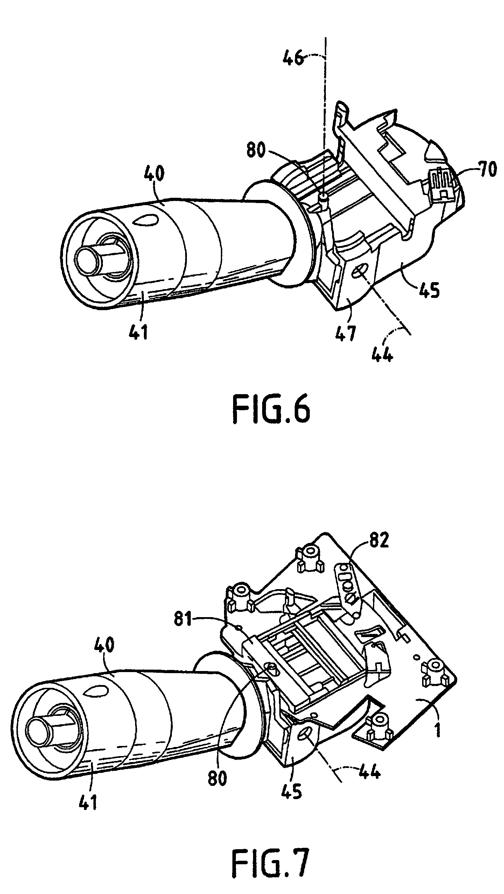

la figure 5 montre les mécanismes de commutation actionnés par les deux bagues rotatives ;
la figure 6 montre le mécanisme de commutation commandé par le pivotement de la manette ;
la figure 7 montre le mécanisme de commutation commandé par le basculement de la manette dans le sens tirer/pousser ;

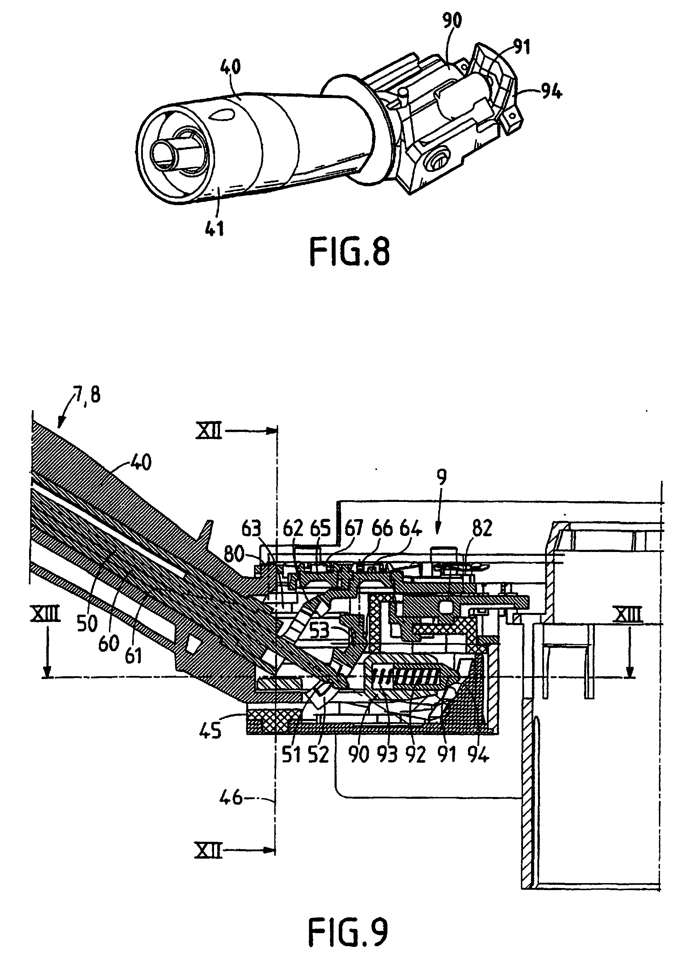

la figure 8 montre le mécanisme d'indexage de la manette ;
la figure 9 est une coupe selon un plan parallèle à l'axe de la colonne de direction et passant par l'axe de la manette de commande d'un dispositif de commutation selon l'invention, monté dans le boîtier de support ;

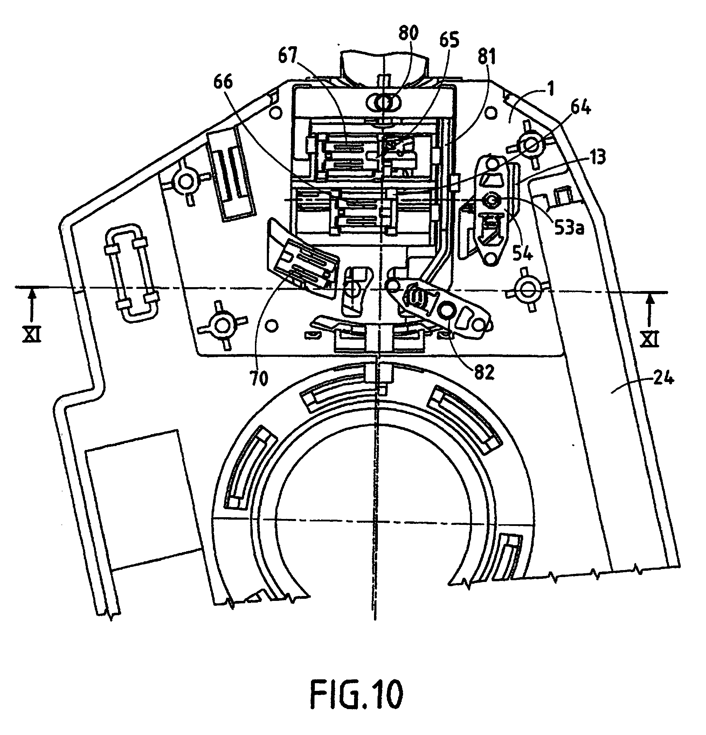

la figure 10 est une vue de dessus de l'ensemble montré sur la figura 9 ;

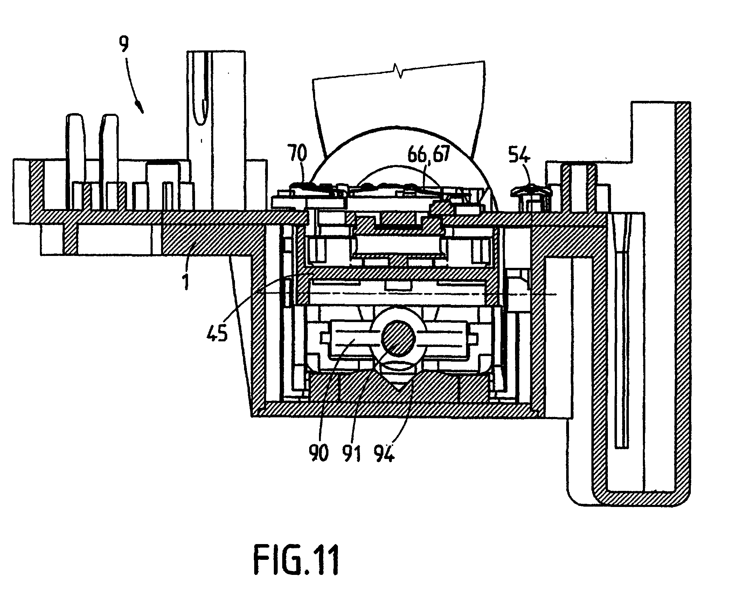

la figure 11 est une coupe selon la ligne XI-XI de la figure 10, de l'ensemble montré sur la figure 9 ;

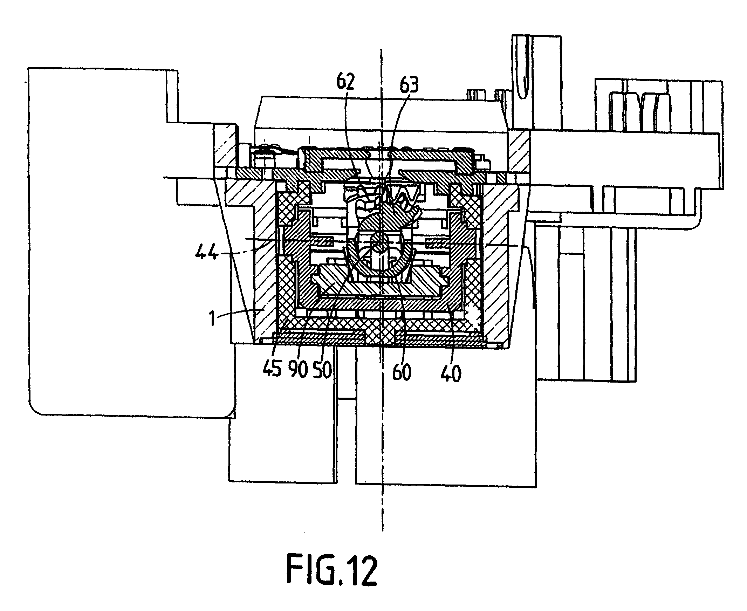

la figure 12 est une coupe du même ensemble selon la ligne XII-XII de la figure 9, et

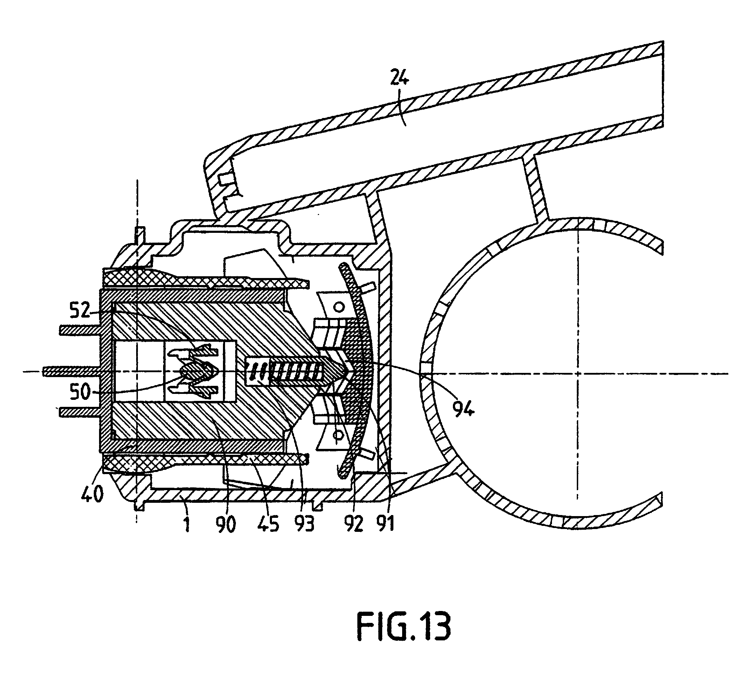

la figure 13 est une coupe du même ensemble selon la ligne XIII-XIII de la figure 9.

L'ensemble de commutation montré sur les dessins comporte de manière générale un boîtier support 1, et, montés sur ce boîtier support, un commutateur d'éclairage 2 et un commutateur d'essuie-vitre 3. Le boîtier support 1, de forme globalement parallélépipédique, comporte une face supérieure 4, deux faces latérales à partir desquelles s'étendent vers l'extérieur les manettes de commande respectives 7 et 8 des commutateurs 2 et 3, une face avant et une face arrière 9 disposée du côté du conducteur. Il comporte un trou traversant 10 pour son montage sur un tube de colonne de direction 11 logeant l'arbre de direction 12. Des ouvertures 13 sont pratiquées sur la face 9 pour laisser passer des organes de commande d'éléments de contact mobiles des commutateurs 2 et 3. Selon l'invention, ces éléments de contact mobiles sont tous disposés dans le même plan parallèle au plan de la face arrière 9.

Ces éléments de contact mobiles sont susceptibles de coopérer avec des pistes conductrices fixes par rapport au boîtier support 1. Ces pistes conductrices fixes sont prévues sur un circuit flexible 20 qui est localement rigidifié au droit des zones de commutation 21 et 22. Ces zones 21 et 22 permettent de réaliser les fonctions de commutation. Ces fonctions sont localement codées sur le circuit flexible 20 en niveau de tension, afin de réduire le nombre de pistes entre ces zones de commutation 21, 22 et une carte électronique 23 disposée dans un logement 24 en dessous de la face supérieure 4 du boîtier 1.

Le circuit flexible 20 peut avantageusement comporter une limande 25 équipée d'un connecteur 26 qui se branche sur un module contacteur-antivol à faible courant 27.

Le circuit flexible 20 comporte également divers autres contacteurs permettant la connexion d'un satellite radio d'un régulateur d'allure, et éventuellement d'un contacteur tournant.

La carte électronique 23 regroupe les fonctions de commutation des commutateurs d'éclairage 2 et d'essuie-vitre 3, les fonctions de multiplexage, les fonctions de décryptage du transpondeur, et les fonctions du capteur d'angle. On observera ici que les commutateurs 2 et 3 ne commutent que des courants de commande de l'électronique portée par la carte 23, donc des courants de faible intensité. La puissance électrique nécessaire aux consommateurs est commutée par un boîtier de servitude recevant des signaux de la carte électronique 23. Ces signaux sont soit multiplexés soit codés.

Ainsi, les fonctions de commutation et d'interface électrique (connectique) sont réalisées sur le circuit flexible 20 relié à la carte électronique 23, ce dernier regroupant les fonctions électroniques.

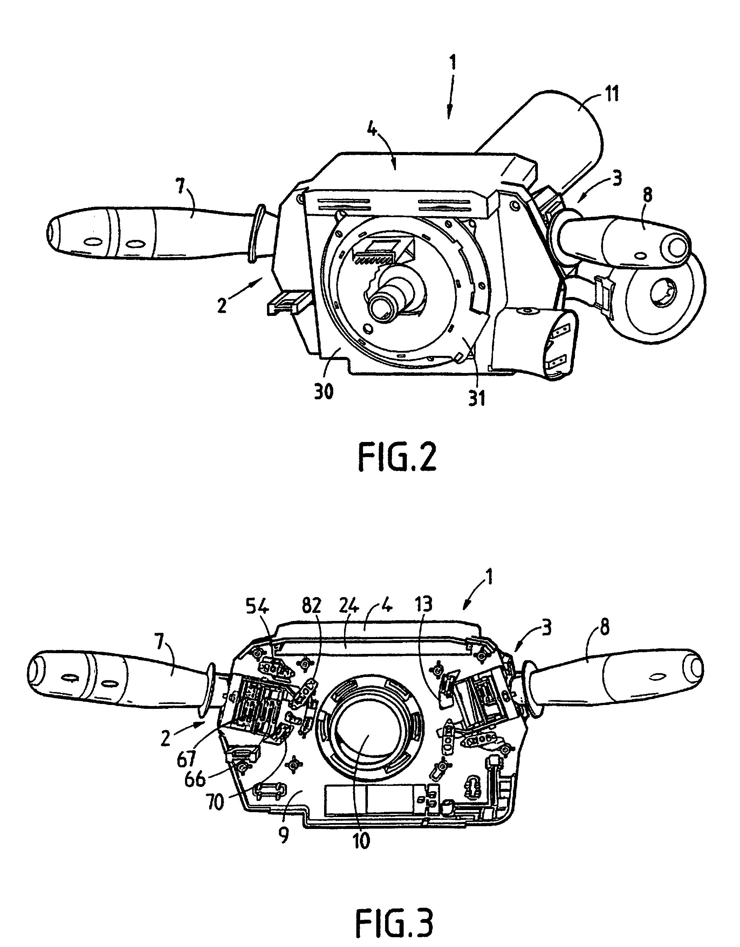

Ainsi que cela est montré sur la figure 2, le boîtier support 1 est refermé par un couvercle 30 qui recouvre le circuit flexible 20. Ce couvercle comporte une ouverture circulaire coaxial à l'axe de l'arbre de direction 12, dans laquelle est montée un contacteur tournant 31 assurant la liaison électrique entre le volant et l'ensemble haut de colonne pour la commande de l'air-bag et la liaison avec des touches du volant.

Les commutateurs 2 et 3 ont des pièces identiques à l'exception des pièces de billage qui assurent l'indexage des positions de la manette de commande 7 ou 8 dans le sens du pivotement et dans le sens du basculement. Les mécanismes de commutation et d'indexage des commutateurs 2 et 3 sont intégrés dans des logements prévus dans le boîtier support 1.

Chaque manette de commande 7, 8 se compose d'un corps 40 monté rotatif dans un plan parallèle au volant et dans le plan que la manette définit avec la colonne de direction, et, d'autre part, d'une bague rotative médiane 41, d'une bague rotative d'extrémité 42 et d'un bouton poussoir d'extrémité 43.

Le corps 40 est monté rotatif autour d'un axe de basculement 44 parallèle au volant sur un moyeu 45, lui-même monté rotatif autour d'un axe de pivotement 46 perpendiculaire à l'axe 44 dans le boîtier 1. Le moyeu 45 comporte es surfaces cylindriques 47 centrées sur l'axe 46 qui coopèrent avec des surfaces cylindriques du boîtier support 1 pour permettre la rotation du moyeu 45 dans son logement.

Le bouton poussoir 43 agit sur une tige 50 qui coulisse dans le corps de manette 40. Cette tige 50 comporte à son extrémité une gorge 51. Cette gorge 51 rentre dans une fourchette 52 de forme incurvée. Le haut de cette fourchette 52 comporte un axe 53, parallèle à l'axe de basculement 44, qui autorise le pivotement de la fourchette 52 dans le moyeu 45. La forme de la fourchette 52 est circulaire et concentrique à l'axe de basculement 44. Ainsi, le basculement de la manette 7, 8 dans le sens tirer/pousser est sans conséquence sur la position de la fourchette 52 par rapport au moyen 45. La fourchette 52 présente dans sa partie supérieure un tourillon 53a qui traverse une lumière 13 de la face arrière 9 du boîtier 1. Le tourillon 53a entraîne en translation par rapport au moyeu 45, en enfonçant le bouton poussoir 43, une lame de contact 54. Cette lame de contact 54 vient commuter deux pistes circulaires prévues dans les zones de commutation 21, 22 du circuit flexible 20. Ces pistes circulaires sont centrées sur l'axe de pivotement 46.

Les bagues rotatives 41 et 42 entraînent respectivement en rotation des tubes 60, 61 coaxiaux à la tige 50. Ces tubes 60, 61 portent à leurs extrémités situées dans le moyeu 45, des secteurs dentés 62, 63 (voir figures 9 et 12). Ces secteurs dentés entraînent respectivement en translation par rapport au boîtier support 1, des chariots 64, 65 qui supportent des curseurs 66, 67. Les chariots 64 et 65 sont montés coulissant dans des ouvertures 13 de la face arrière du boîtier support 1. Ces curseurs viennent commuter des plages de contact dans les zones 21 et 22 du circuit flexible 21. Ainsi que cela est visible sur la figure 9, les zones de contact entre les secteurs dentés 62, 63 et les portions de crémaillère des chariots 64, 65 sont disposés le plus près possible de l'axe de pivotement 46 de la manette correspondante, afin de minimiser les mouvements parasites des chariots 64 et 65 lors du pivotement de la manette 7, 8. Les secteurs dentés 62, 63 et les crémaillères ont des profils bombés de manière à tolérer les mouvements de basculement de la manette dans le sens tirer/pousser. Les chariots 64, 65 restent immobiles par rapport au boîtier support 1 lors du basculement de la manette autour de l'axe 44.

Le moyeu 45 supporte un curseur 70 qui émerge par une ouverture 13 sur la face arrière du boîtier support et qui vient frotter sur des plages de contact du circuit flexible 20. Lorsque la manette 7, 8 pivote autour de l'axe de pivotement 46, le curseur 70 pivote également autour de cet axe 46.

Les manettes 7, 8 basculent dans le moyeu 45 autour d'un axe de basculement 44 concourant avec l'axe de pivotement 46. Un tourillon 80 solidaire du corps de manette 40, coaxial en position neutre avec l'axe de pivotement 46 et situé près de la face arrière 9 du boîtier 1, entraîne en translation par rapport au boîtier support 1, un coulisseau 81 par l'une de ses extrémités. A l'autre extrémité, le coulisseau 81 entraîne une lame de contact 82 qui vient commuter des plages de contact dans les zones 21, 22 du circuit flexible 20.

Les manettes 7, 8 comportent en outre une entretoise 90 logeant dans le moyeu 45. Un plongeur 91 armé par un ressort 92 coulisse dans un logement 93 prévu dans l'entretoise 90. L'extrémité du plongeur 91 est en contact avec une rampe bidirectionnelle 94 solidaire de la paroi du boîtier support 1 et qui assure l'indexage des mouvements des manettes 7, 8. Le nombre de positions d'indexage de la rampe bidirectionnelle 94 est calculé selon les fonctions à réaliser par chacun des commutateurs 2 et 3. Certaines positions peuvent être stables, tandis que d'autres positions peuvent être instables.

## Revendications

1. Ensemble haut de colonne de direction de véhicule automobile, du type comportant un boîtier support (1) destiné à être monté sur un tube de colonne direction (11) et des dispositifs de commutation d'éclairage (2) et d'essuie-vitre (3) qui présentent des manettes de commande (7, 8) qui s'étendent vers l'extérieur sur les faces latérales dudit boîtier (1), et des mécanismes de commutation et d'indexage logeant dans ledit boîtier (1), lesdits dispositifs de commutation (2, 3) comportant notamment des contacts actionnables par lesdites manettes de commande (7,8) pour coopérer avec des pistes conductrices fixes par rapport au boîtier (1), **caractérisé par le fait que** les contacts (54, 66, 67, 70, 82) sont tous disposés dans le même plan parallèle au plan de la face arrière (9) du boîtier (1), l'arrière étant défini par rapport au sens de déplacement normal du véhicule et **par le fait que** les pistes conductrices sont formées sur un circuit flexible (20) disposé sur ladite face arrière (9) de boîtier (1), ce circuit flexible (20) étant connecté à une carte électronique (23) disposée dans un logement (24) prévu sous la face supérieure (4) du boîtier (1).

2. Ensemble selon la revendication 1, **caractérisé par le fait que** le circuit flexible (20) comporte en outre une limande (25) se branchant sur un module contacteur-antivol (27).

3. Ensemble selon l'une quelconque des revendications 1 ou 2, **caractérisé par le fait que** le circuit flexible (20) comporte en outre des connecteurs pour la liaison de fonctions supplémentaires.

4. Ensemble selon l'une quelconque des revendications 1 à 3, **caractérisé par le fait que** le boîtier (1) est refermé sur sa face arrière par un couvercle (30).

5. Ensemble selon la revendication 4, **caractérisé par le fait que** le couvercle (30) supporte un contacteur tournant (31) assurant la liaison électrique entre le volant et la carte électronique (23) par l'intermédiaire du circuit flexible (20).

6. Ensemble selon l'une quelconque des revendications 1 à 5, **caractérisé par le fait que** la carte électronique (23) ne commute que des petits signaux.

7. Ensemble selon l'une quelconque des revendications 1 à 6, **caractérisé par le fait que** le circuit flexible (20) est rigidifié dans les zones (21, 22) situées au droit des pistes conductrices.

8. Ensemble selon la revendication 7, **caractérisé par le fait que** les fonctions de commutation sont localement codées sur le circuit flexible (20) en niveau de tension dans les zones rigidifiées (21, 22), afin de réduire le nombre de pistes entre ces zones.

9. Ensemble selon l'une quelconque des revendications 1 à 8, **caractérisé par le fait que** l'un au moins des dispositifs de commutation (2, 3) comporte un bouton-poussoir (43) en extrémité de la manette de commande (7, 8), ce bouton-poussoir (43) agissant sur une tige comportant à son extrémité une gorge (51) rentrant dans une fourchette de forme circulaire, montée pivotant autour d'un axe (53) parallèle à l'axe de basculement (44) et comportant un tourillon (53a) pour entraîner en translation une lame de contact (54) par enfoncement du bouton poussoir (43), la forme de la fourchette étant concentrique à l'axe de basculement (44) de la manette de commande (7, 8).

10. Ensemble selon l'une quelconque des revendications 1 à 9, **caractérisé par le fait que** l'un au moins des dispositifs de commutation (2, 3) comporte un corps de manette (40) ayant un tourillon (80) coaxial, en position neutre, avec l'axe de pivotement (46) de la manette de commande (7, 8), et susceptible d'entraîner en translation un coulisseau (81) portant une lame de contact (82) lors du basculement de la manette de commande (7, 8).

11. Ensemble selon l'une quelconque des revendications 1 à 10, **caractérisé par le fait que** l'un au moins des dispositifs de commutation (2, 3) comporte au moins une bague rotative (41, 42) sur la manette de commande (7, 8), ladite bague rotative (41, 42) entraînant en rotation un tube (60, 61) portant à son extrémité un secteur denté (62, 63) susceptible d'entraîner en translation par rapport au boîtier un chariot (64, 65) supportant un curseur (66, 67) par l'intermédiaire d'une crémaillère de chariot.

12. Ensemble selon la revendication 11, **caractérisé par le fait que** les zones de contact entre le secteur denté (62, 63) et la crémaillère sont disposées au voisinage de l'axe de pivotement (46) de la manette de commande et on des profils bombés.

## Patentansprüche

1. Lenksäulenoberteil eines Kraftfahrzeugs mit einem Lagergehäuse (1), das zum Einbau an einem Lenksäulenrohr (11) bestimmt ist, und Schaltvorrichtungen für die Beleuchtungs- (2) und Scheibenwischanlage (3), die Betätigungshebel (7, 8) aufweisen, die sich auf den Seitenflächen des besagten Gehäuses (1) nach außen erstrecken, sowie Schalt- und Rasterungsmechanismen, die in dem besagten Gehäuse (1) gelagert sind, wobei die besagten Schaltvorrichtungen (2, 3) insbesondere Kontakte umfassen, die durch die besagten Betätigungshebel (7, 8) betätigbar sind, um mit im Verhältnis zum Gehäuse (1) ortsfesten Leiterbahnen zusammenzuwirken,
**dadurch gekennzeichnet, daß** die Kontakte (54, 66, 67, 70, 82) alle in der gleichen Ebene parallel zur Ebene der Rückseite (9) des Gehäuses (1) angeordnet sind, wobei die Rückseite bezogen auf die normale Fahrtrichtung des Fahrzeugs definiert ist, und daß die Leiterbahnen auf einer biegsamen Schaltung (20) ausgebildet sind, die auf der besagten Rückseite (9) des Gehäuses (1) angeordnet ist, wobei diese biegsame Schaltung (20) an eine Elektronikkarte (23) angeschlossen ist, die in einer unter der Oberseite (4) des Gehäuses (1) vorgesehenen Aufnahme (24) angeordnet ist.

2. Lenksäulenoberteil nach Anspruch 1, **dadurch gekennzeichnet, daß** die biegsame Schaltung (20) außerdem ein Flachkabel (25) umfaßt, das an ein Lenkradschloßmodul (27) angeschlossen ist.

3. Lenksäulenoberteil nach einem der Ansprüche 1 oder 2, **dadurch gekennzeichnet, daß** die biegsame Schaltung (20) außerdem Verbinder für den Anschluß zusätzlicher Funktionen umfaßt.

4. Lenksäulenoberteil nach einem der Ansprüche 1 bis 3, **dadurch gekennzeichnet, daß** das Gehäuse (1) auf seiner Oberseite durch einen Deckel (30) verschlossen ist.

5. Lenksäulenoberteil nach Anspruch 4, **dadurch gekennzeichnet, daß** der Deckel (30) einen Drehschalter (31) trägt, der die elektrische Verbindung zwischen dem Lenkrad und der Elektronikkarte (23) über die biegsame Schaltung (20) herstellt.

6. Lenksäulenoberteil nach einem der Ansprüche 1 bis 5, **dadurch gekennzeichnet, daß** die Elektronikkarte (23) nur kleine Signale schaltet.

7. Lenksäulenoberteil nach einem der Ansprüche 1 bis 6, **dadurch gekennzeichnet, daß** die biegsame Schaltung (20) in Bereichen (21, 22) versteift ist, die sich in Höhe der Leiterbahnen befinden.

8. Lenksäulenoberteil nach Anspruch 7, **dadurch gekennzeichnet, daß** die Schaltfunktionen örtlich auf der biegsamen Schaltung (20) in den versteiften Bereichen (21, 22) Spannungspegel-codiert sind, um die Anzahl der Leiterbahnen zwischen diesen Bereichen zu verringern.

9. Lenksäulenoberteil nach einem der Ansprüche 1 bis 8, **dadurch gekennzeichnet, daß** wenigstens eine der Schaltvorrichtungen (2, 3) einen Druckknopf (43) am Ende des Betätigungshebels (7, 8) umfaßt, wobei dieser Druckknopf (43) auf einen Stift einwirkt, der an seinem Ende eine Auskehlung (51) enthält, die in eine kreisförmige Gabel eingreift, die drehbar um eine zur Kippachse (44) parallele Achse (53) gelagert ist und einen Lagerzapfen (53a) umfaßt, um eine Kontaktleiste (54) durch Eindrücken des Druckknopfs (43) in einer geradlinigen Bewegung anzutreiben, wobei die Form der Gabel konzentrisch zur Kippachse (44) des Betätigungshebels (7, 8) ausgeführt ist.

10. Lenksäulenoberteil nach einem der Ansprüche 1 bis 9, **dadurch gekennzeichnet, daß** wenigstens eine der Schaltvorrichtungen (2, 3) einen Hebelkörper (40) umfaßt, der einen Lagerzapfen (80) aufweist, der in Neutralstellung konzentrisch zur Kippachse (46) des Betätigungshebels (7, 8) verläuft und einen eine Kontaktleiste (82) tragenden Schieber (81) bei der Kippbewegung des Betätigungshebels (7, 8) in einer geradlinigen Bewegung antreiben kann.

11. Lenksäulenoberteil nach einem der Ansprüche 1 bis 10, **dadurch gekennzeichnet, daß** wenigstens eine der Schaltvorrichtungen (2, 3) wenigstens einen Drehring (41, 42) auf dem Betätigungshebel (7, 8) umfaßt, wobei der besagte Drehring (41, 42) ein Rohr (60, 61) drehend antreibt, das an seinem Ende ein Zahnsegment (62, 63) trägt, das einen Schlitten (64, 65), der einen Gleitkontakt (66, 67) lagert, über eine Schlittenzahnstange, bezogen auf das Gehäuse, in einer geradlinigen Bewegung antreiben kann.

12. Lenksäulenoberteil nach Anspruch 11, **dadurch gekennzeichnet, daß** die Kontaktbereiche zwischen dem Zahnsegment (62, 63) und der Zahnstange in der Nähe der Drehachse (46) des Betätigungshebels angeordnet sind und gewölbte Profile aufweisen.

## Claims

1. Upper steering column apparatus for a motor vehicle, of the type comprising a support casing (1) adapted to be mounted on a steering column tube (11), together with lighting switch means (2) and screen wiper switch means (3) having control stalks (7, 8) which extend outwards from the side faces of the said casing (1), and switching and indexing mechanisms disposed within the said casing (1), the said switch means (2, 3) including, in particular, contacts arranged for actuation by the said control stalks (7, 8) whereby to cooperate with conductive tracks which are fixed with respect to the casing (1),
**characterised by** the fact that the contacts (54, 66, 67, 70, 82) are all disposed in the same plane parallel to the plane of the posterior face (9) of the casing (1), the posterior being defined with respect to the direction of normal travel of the vehicle, and by the fact that the conductive tracks are formed on a flexible circuit (20) disposed on the said posterior face (9) of the casing (1), the said flexible circuit (20) being connected to an electronic circuit board (23) disposed in a housing (24) which is located below the upper face (4) of the casing (1).

2. Apparatus according to Claim 1, **characterised by** the fact that the flexible circuit (20) further includes a tail (25) connected to an anti-theft contactor module (27).

3. Apparatus according to Claim 1 or Claim 2, **characterised by** the fact that the flexible circuit (20) further includes connectors for connection of supplementary functions.

4. Apparatus according to any one of Claims 1 to 3, **characterised by** the fact that the casing (1) is closed on its posterior face by a cover piece (30).

5. Apparatus according to Claim 4, **characterised by** the fact that the cover piece (30) supports a rotary contactor (31) for making the electrical connection between the steering wheel and the electronic circuit board (23) through the flexible circuit (20).

6. Apparatus according to any one of Claims 1 to 5, **characterised by** the fact that the electronic circuit board (23) only switches weak signals.

7. Apparatus according to any one of Claims 1 to 6, **characterised by** the fact that the flexible circuit (20) is stiffened in the zones (21, 22) which are situated in line with the conductive tracks.

8. Apparatus according to Claim 7, **characterised by** the fact that the switching functions are locally coded on the flexible circuit (20) at the voltage level in the stiffened zones (21, 22), whereby to reduce the number of tracks between the said zones.

9. Apparatus according to any one of Claims 1 to 8, **characterised by** the fact that at least one of the switch means (2, 3) includes a push button (43) at the end of the control stalk (7, 8) the said push button (43) acting on a rod having at its end a groove (51) inserted in a fork of circular form, which is pivoted a pivot axis (53) parallel to the tilt axis (44) and including a finger (53a) for displacing a leaf contact (54) in straight-line motion when the push button (43) is pressed, the form of the fork being concentric with the tilt axis (44) of the control stalk (7, 8).

10. Apparatus according to any one of Claims 1 to 9, **characterised by** the fact that at least one of the switch means (2, 3) includes a stalk body (40) having a finger (80) which, in the neutral position, is coaxial with the pivot axis (46) of the control stalk (7, 8), and which is adapted to drive in straight-line motion a slider (81) carrying a leaf contact (82) during the tilting movement of the control stalk (7, 8).

11. Apparatus according to any one of Claims 1 to 10, **characterised by** the fact that at least one of the switch means (2, 3) includes at least one sleeve (41, 42) rotatable on the control stalk (7, 8), the said rotatable sleeve (41, 42) driving in rotation a tube (60, 61) which carries at its end a toothed sector (62, 63) for driving a travelling member (64, 65) which supports a cursor (66, 67), in straight line motion with respect to the casing, via a rack of the travelling member.

12. Apparatus according to Claim 11, **characterised by** the fact that the zones of contact between the toothed sector (62, 63) and the rack are disposed close to the pivot axis (46) of the control stalk, and have bulbous profiles.
